# EUROPÄISCHE PATENTSCHRIFT

(11) **EP 1 835 208 B1**
(45) Veröffentlichungstag und Bekanntmachung des Hinweises auf die Patenterteilung: **05.11.2008**
(21) Anmeldenummer: 07002392.4
(22) Anmeldetag: 03.02.2007
(51) Int. Cl.: F16K 5/06

(54) **Netzschutzvorrichtung für ein Gas- oder Flüssigkeitsversorgungsnetz, an das eine Vielzahl von Verbrauchern angeschlossen ist, welche Netzschutzvorrichtung jeweils in der Anschlussleitung zwischen dem Versorgungsnetz und dem einzelnen Verbraucher liegt**
Network protection device for a gas or fluid supply network to which a large number of consumers is connected, where the network protection device is located in the connecting pipeline between the supply network and the individual consumer
Dispositif de protection de réseau pour un réseau d'alimentation en liquide ou en gaz, auquel une multitude d'utilisateurs sont connectés, se trouvant systématiquement dans la conduite de raccordement entre le réseau d'alimentation et l'utilisateur isolé

(30) Priorität: 18.03.2006 DE 202006004330 U
(43) Veröffentlichungstag der Anmeldung: 19.09.2007
(73) Patentinhaber: PFEIFFER CHEMIE-ARMATURENBAU GmbH, 47906 Kempen (DE)
(72) Erfinder: Thomas, Karl-Wilhelm, 41540 Dormagen (DE); Druyen, Stephan, 47669 Wachtendonk (DE)
(74) Vertreter: Sroka, Peter-Christian

(56) Entgegenhaltungen:
- EP-A2- 1 146 269
- DE-U1- 20 209 195
- US-B1- 6 832 621

## Beschreibung

Der Anschluß von Versorgungsnetzen, z.B. Ammoniaknetzen, Stickstoffnetzen oder Wasserstoffnetzen, muß mit einer Netzschutzvorrichtung versehen sein, wobei ihre Ausführung grundsätzlich abhängig ist von der Netzart und dem abgesicherten Prozeßdruck beim Verbraucher bzw. Abnehmer.

Die heute üblichen Netzschutzvorrichtungen bestehen aus einer Doppelabsperrung mit Zwischenentspannung und arbeiten nach dem sogenannten Block-and-Bleed-System. Die Ableitung der Zwischenentspannung sollte in eine Abgasreinigungsanlage, z.B. einer Abgaswäsche oder Fackel, gehen. Es muß sichergestellt werden, daß das Netz selbst nicht über die Zwischenentspannung entleert werden kann.

Die heute üblichen Netzschutzvorrichtungen enthalten in der Regel zwei in der Anschlußleitung liegende Absperrorgane sowie ein drittes Absperrorgan, das zwischen den beiden erstgenannten Absperrorganen an die Anschlußleitung angeschlossen ist. In Abhängigkeit von der Anzahl der Absperrorgane sind auch entsprechende Stellungs-Rückmeldungen und Antriebselemente für die Absperrorgane erforderlich, was zu einem erheblichen konstruktiven Aufwand und einem entsprechend hohen Verbrauch an Infrastruktur (Platz) und finanziellen Mitteln führt.

Der Erfindung liegt die Aufgabe zugrunde, eine demgegenüber vereinfachte Netzschutzvorrichtung zu schaffen.

Zur Lösung dieser Aufgabe ist die erfindungsgemäße Netzschutzvorrichtung dadurch gekennzeichnet, daß sie als Drehschieber in Form eines Kugelhahns ausgebildet ist, dessen in einem Kugelhahngehäuse gelagertes Kugelküken eine seitlich von der Kugelkükenaußenseite ausgehende, in die Kugelküken-Durchgangsbohrung mündende Entlüftungsbohrung aufweist, die in der Schließstellung des Kugelkükens, d.h. ohne Überschneidung mit dem geöffneten oder teilgeöffneten Küken, an einen in dem Kugelhahngehäuse angebrachten Entlüftungskanal anschließt, wobei gemäß weiterer Erfindung zwei diametral gegenüberliegende, federbelastet gegen das Kugelküken anliegende Dichtungsringe vorgesehen sind.

Diese beiden federbelasteten Dichtungsringe übernehmen bei der erfindungsgemäßen Netzschutzvorrichtung im wesentlichen die Funktion der bei bekannten Netzschutzvorrichtungen in der Anschlußleitung hintereinanderliegenden Absperrorgane. Während also bisher drei Absperrorgane mit entsprechenden Antriebseinrichtungen erforderlich gewesen sind, wird erfindungsgemäß der gleiche Zweck mit nur einem Absperrorgan erreicht, was sowohl kontruktionsmäßig eine wesentliche Vereinfachung bedeutet als auch zu einem geringeren Aufwand in mehrfacher Hinsicht führt, da nicht mehr drei Absperrorgane, sondern nur noch ein Absperrorgan angetrieben werden muß.

Die Erfindung wird im folgenden anhand der Zeichnung näher beschrieben:
Figur 1 zeigt eine Seitenansicht der erfindungsgemäßen Netzschutzvorrichtung;
Figur 2 zeigt eine Schnittansicht gemäß der Linie B - B in Figur 1 bei geschlossener Netzschutzvorrichtung;
Figur 3 zeigt eine Schnittansicht gemäß der Linie B - B bei geöffneter Netzschutzvorrichtung;
Figur 4 zeigt einen Axialschnitt der Netzschutzvorrichtung in dem geschlossenen Zustand.

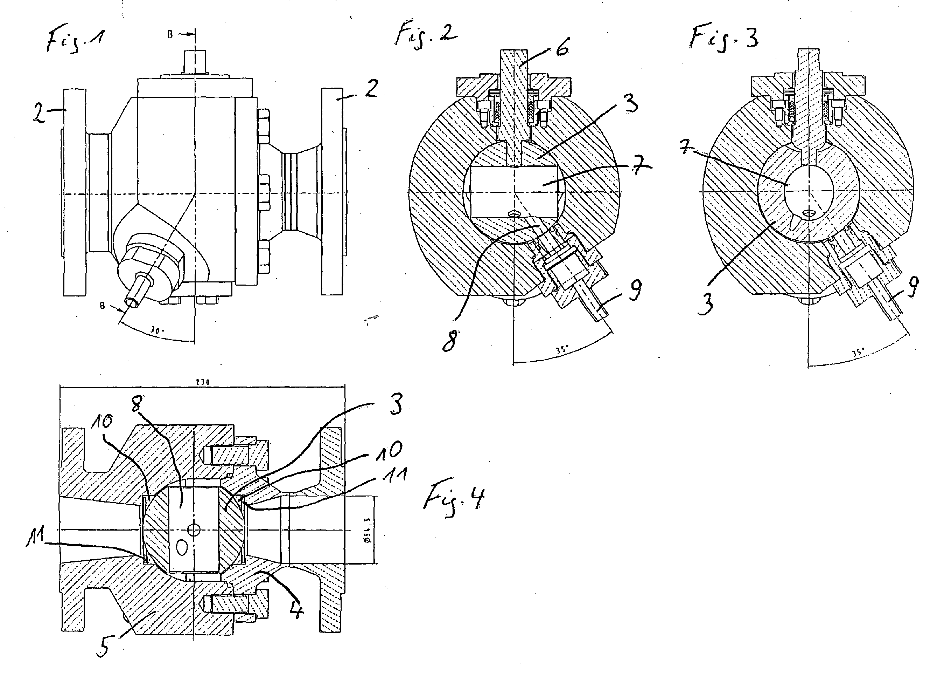

Die erfindungsgemäße Netzschutzvorrichtung umfaßt ein beidseitig mit Anschlußflanschen 2 ausgerüstetes Rohrstück, welches zum Zwecke des Einsetzens des in den Figuren 2 bis 4 dargestellten Kugelkükens 3 zweigeteilt ist. Die beiden das zweigeteilte Rohrstück bildenden Einzelabschnitte 4 und 5 bilden gleichzeitig das Kugelhahngehäuse. Das in dem Kugelhahngehäuse 4, 5 drehbar gelagerte Kugelküken 3 ist mittels der abgedichtet durch das Gehäuse geführten Stellspindel 6 zwischen der in den Figuren 2 und 4 dargestellten Schließstellung und der in Figur 3 dargestellten Offenstellung verschwenkbar bzw. drehbar. Diese Stellspindel bildet gleichzeitig auch die Drehlagerung für das Kugelküken 3, dem vorzugsweise der Stellspindel 6 diametral gegenüberliegend ein weiterer in dem Gehäuse gelagerter Drehzapfen zugeordnet sein kann. Der Kugelhahn bildet einen Drehschieber, dessen Kugelküken 3 eine seitlich von der Kugelkükenaußenwand ausgehende, in die Kugelkükendurchgangsbohrung 7 mündende Entlüftungsbohrung 8 aufweist, die nur in der in Figur 2 dargestellten Schließstellung in einem in den Kugelhahngehäuse 4, 5 angebrachten Entlüftungskanal 9 anschließt, der durch einen in das Gehäuseteil 5 eingeschraubten, im wesentlichen nippelartigen Einsatzkörper hindurchgeführt ist.

Gemäß Figur 4 sind diametral gegenüberliegend zwei federbelastete, gegen das Kugelküken 3 anliegende Dichtungsringe 10 vorgesehen, die von Tellerfedern 11 gegen das Kugelküken 3 gedrückt werden. Anders als bei üblichen Kugelhähnen findet damit eine zuverlässige Abdichtung nach beiden Seiten statt, wodurch diese beiden federbelasteten Dichtungen in der Lage sind, die Funktion der bisher bei bekannten Netzschutzvorrichtungen zwei Absperrorganen zu übernehmen, die bisher hintereinanderliegend in der Anschlußleitung benötigt wurden, welche das Versorgungsnetz mit dem einzelnen Verbraucher verbindet.

Die in der Zeichnung wiedergegebenen Maßangaben sind nur beispielhaft, ohne einen Einfluß auf die Erfindung zu haben. Der in Figur 1 dargestellte Winkel von 30°, unter dem die Achse des Entlüftungskanals (9) das Zentrum des Kugelkükens (3) schneidet, hat sich als besonders vorteilhaft für die räumliche Anordnung der einzelnen Komponenten herausgestellt.

## Patentansprüche

1. Netzschutzvorrichtung für ein Gas- oder Flüssigkeits-Versorgungsnetz, an das eine Vielzahl von Verbrauchern angeschlossen sind, welche Netzschutzvorrichtung jeweils in der Anschlußleitung zwischen dem Versorgungsnetz und den einzelnen Verbrauchern liegt, **dadurch gekennzeichnet, daß** sie als Drehschieber in Form eines Kugelhahns ausgebildet ist, dessen Kugelküken (3) eine seitlich von der Kugelaußenseite ausgehende, in die Kugelkükendurchgangsbohrung (7) mündende Entlüftungsbohrung (8) aufweist, die nur in der Schließstellung des Kugelkükens (3) d.h. ohne Überschneidung mit dem geöffneten oder teilgeöffneten Küken, an eine durch das Kugelhahngehäuse geführten Entlüftungskanal anschließt.

2. Netzschutzvorrichtung nach Anspruch 1, **dadurch gekennzeichnet, daß** sie diametral gegenüberliegend zwei federbelastet gegen das Kugelküken (3) anliegende Dichtungsringe (10) aufweist.

3. Netzschutzvorrichtung nach Anspruch 2, **dadurch gekennzeichnet, daß** die Dichtungsringe (10) von Tellerfedern (11) gegen das Kugelküken (3) gedrückt werden.

4. Verwendung einer Netzschutzvorrichtung nach einem der Ansprüche 1 bis 3 für ein Gas- oder Flüssigkeits-Versorgungsnetz, an das eine Vielzahl von Verbrauchern angeschlossen sind, welche Netzschutzvorrichtung jeweils in der Anschlussleitung zwischen dem Versorgungsnetz und den einzelnen Verbrauchern liegt, wobei diese Netzschutzvorrichtung als Drehschieber in Form eines Kugelhahns ausgebildet ist, dessen Kugelküken (3) eine seitlich von der Kugelaußenseite ausgehende, in die Kugelkükendurchgangsbohrung (7) mündende Entlüftungsbohrung (8) aufweist, die nur in der Schließstellung des Kugelkükens (3) d.h. ohne Überschneidung mit dem geöffneten oder teilgeöffneten Küken, an eine durch das Kugelhahngehäuse geführten Entlüftungskanal anschließt.

## Claims

1. A network protection device for a gas or liquid supply network, to which a large number of consumers are connected, said network protection device in each case being located in the connecting pipe between the supply network and the individual consumers, **characterized in that** it is designed as a rotary valve taking the form of a ball valve, the ball plug (3) of which has a vent hole (8) which starts at the side on the outside of the ball, opens into the through hole (7) of the ball plug (3) and, only in the closed position of the ball plug (3), i.e. without overlapping with the open or partly open plug, connects with a venting duct extending through the housing of the ball valve.

2. A network protection device according to Claim 1, **characterized in that** it has two sealing rings (10) located diametrically opposite one another and springloaded so as to rest against the ball plug (3).

3. A network protection device according to Claim 2, **characterized in that** the sealing rings (10) are pressed against the ball plug (3) by plate springs (11).

4. Use of a network protection device according to one of Claims 1 to 3 for a gas or liquid supply network, to which a large number of consumers are connected, said network protection device in each case being located in the connecting pipe between the supply network and the individual consumers, and being designed as a rotary valve taking the form of a ball valve, the ball plug (3) of which has a vent hole (8) which starts at the side on the outside of the ball, opens into the through hole (7) of the ball plug (3) and, only in the closed position of the ball plug (3), i.e. without overlapping with the open or partly open plug, connects with a venting duct extending through the housing of the ball valve.

## Revendications

1. Dispositif de protection d'un réseau d'alimentation en gaz ou en liquide, auquel une pluralité d'utilisateurs sont raccordés, dispositif de protection de réseau qui se trouve respectivement dans la ligne de raccordement entre le réseau d'alimentation et les divers utilisateurs, **caractérisé en ce qu'**il est constitué en tiroir tournant sous la forme d'un robinet à boisseau sphérique, dont le boisseau (3) a un trou (8) d'aération partant latéralement du côté extérieur du boisseau, débouchant dans le trou (7) traversant du boisseau et se raccordant à un canal d'aération passant dans le corps du robinet seulement en la position de fermeture du boisseau (3), c'est-à-dire sans recoupement avec le boisseau ouvert ou ouvert en partie.

2. Dispositif de protection d'un réseau suivant la revendication 1, **caractérisé en ce qu'**il a deux rondelles (10) d'étanchéité diamétralement opposées, s'appliquant sur le boisseau (3) en étant soumises à l'action d'un ressort.

3. Dispositif de protection d'un réseau suivant la revendication 2, **caractérisé en ce que** les rondelles (10) d'étanchéité sont repoussées sur le boisseau (3) par des ressorts (11) à disque.

4. Utilisation d'un dispositif de protection de réseau suivant l'une des revendications 1 à 3, pour un réseau d'alimentation en gaz ou en liquide, auquel une pluralité d'utilisateurs est raccordée, dispositif de protection de réseau qui se trouve respectivement dans la ligne de raccordement entre le réseau d'alimentation et les divers utilisateurs, ce dispositif de protection de réseau étant constitué en tiroir tournant sous la forme d'un robinet à boisseau, dont le boisseau (3) a un trou (8) d'aération partant latéralement du côté extérieur du boisseau, débouchant dans le trou (7) traversant du boisseau et se raccordant à un canal de d'aération passant dans le corps du robinet seulement dans la position de fermeture du boisseau (3) c'est-à-dire sans recoupement avec le boisseau ouvert ou ouvert en partie.
